(19) Europäisches Patentamt
European Patent Office
Office européen des brevets

(11) Publication number: **0 374 695 A2**

(12) **EUROPEAN PATENT APPLICATION**

(21) Application number: 89122919.7

(51) Int. Cl.[5]: **C08F 210/06, C08F 4/642**

(22) Date of filing: 12.12.89

The title of the invention has been amended (Guidelines for Examination in the EPO, A-III, 7.3).

(30) Priority: 16.12.88 US 285416

(43) Date of publication of application: 27.06.90 Bulletin 90/26

(84) Designated Contracting States: BE DE ES FR GB IT NL SE

(71) Applicant: POLYSAR LIMITED
1265 Vidal Street S.
Sarnia Ontario N7T 7M2(CA)

(72) Inventor: Davis, Stephen Custer
1615 Mills Street
Sarnia Ontario N7S 3P3(CA)

(74) Representative: von Kreisler, Alek, Dipl.-Chem. et al
Patentanwälte Von Kreisler-Selting-Werner
Deichmannhaus am Hauptbahnhof
D-5000 Köln 1(DE)

(54) **Ethylene-propylene copolymer.**

(57) The present invention relates to new ethylene-propylene copolymers and to a process for preparing the same. The present copolymers are characterized by having both of a reactivity ratio product $r_1r_2$ between 0.5 and 1.5 and an isotactic index greater than 0. The present copolymers may be obtained by copolymerizing ethylene and propylene in the presence of a metallocene catalyst catalyst containing a group IVb metal and an alumoxane co-catalyst.

EP 0 374 695 A2

# NOVEL ETHYLENE-PROPYLENE COPOLYMER

## Field of the Invention

This invention relates to new ethylene-propylene copolymers and to a process for preparing the same. More particularly, the invention relates new elastomeric ethylene-propylene copolymers having from 57 to 85 mole percent propylene units which are characterized by having both of a reactivity ratio product $r_1r_2$ between 0.5 and 1.5 and an isotactic index of greater than 0 percent.

As the copolymers of the present invention have a reactivity ratio product $r_1r_2$ between 0.5 and 1.5, they do not contain substantial "blocks" of homopolymer units. However, the present copolymers do contain short polypropylene sequences which are characterized by being stereospecific, as indicated by the copolymer having an isotactic index of greater than 0 percent.

The copolymers of the present invention may be prepared by polymerizing ethylene and propylene in the presence of a chiral catalyst containing a metal from Group IVb of the Periodic Table (48th Edition of the Handbook of Chemistry and Physics, CRC Press (1968)), and an alumoxane co-catalyst under polymerization conditions described hereafter.

## BACKGROUND

U.S. patent 3,113,115 (Zieglar et al) and U.S. patent 3,300,459 (Natta et al) teach the copolymerization of ethylene and propylene using a heterogenous catalyst system which includes an aluminum alkyl. In particular, Natta et al describe an elastomeric, ethylene-propylene copolymer having from 20 to 70 weight percent ethylene.

The above Zieglar-Natta inventions have helped to provide a technology base for the development of several commercially important products, including elastomeric, ethylene-propylene copolymers which are commonly referred to as "EP rubber".

More recently, it has been discovered that metallocenes (i.e. compounds having a cyclopentadienyl or indenyl ligand) of group IVb, Vb, VIb or VII metals, in combination with an alumoxane, are highly active polymerization catalysts for ethylene-propylene monomer mixtures. In this regard, the abstract of European Patent Application 128,046 discloses an ethylene-propylene copolymer prepared with at least two non-chiral catalysts. However, as the catalysts are non-chiral, they are inherently unable to produce a copolymer having an isotactic index of greater than 0 percent.

It is further known that the metallocenes bis (cycopentadienyl) zirconium dichloride and bis (cyclopentadienyl) zirconium monomethyl halide, when used in conjunction with an alumoxane, will provide active catalysts for ethylene-propylene copolymerization. For example, U.S. 4,542,199 discloses the use of such a catalyst system for the copolymerization of an olefin of the formula $CH_2CHR$, wherein R is H or a $C_{1-10}$ alkyl, together with other olefins. Again, however, the aforesaid catalysts are not chiral and hence are fundamentally not capable of polymerizing an ethylene-propylene copolymer having an isotactic index of greater than 0 percent.

## SUMMARY OF THE INVENTION

It will be appreciated by those skilled in the art that elastomeric ethylene-propylene copolymers have heretobefore been synthesized in many forms. The characterization of such copolymers is typically described in terms of specific features of their molecular structure, such as crystallinity, molecular weight, molecular weight distribution and monomer sequence distribution.

Block copolymers are particularly well known, as described for example in U.S. patent 4,491,652. Such block copolymers may contain isotactic polypropylene sequences, but they are clearly different from the copolymers of the present invention because block copolymers are characterized by having a reactivity ratio product $r_1r_2$ of substantially greater than 1.5.

Also well known are the commercially available ethylene-propylene rubbers. These rubbers may be divided into two broad classes, according to the type of catalyst which is used to prepare them.

The use of a titanium catalyst provides a copolymer having a reactivity ratio product $r_1r_2$ between 5 and 1, especially between 3 and 2.

The use of a vanadium catalyst typically leads to a copolymer having a reactivity ratio product $r_1r_2$ between 0.1 and 0.5, but further causes the propylene to add in both a head-to-tail and an inverted form (Encyclopedia of Polymer Science and Engineering, John Wiley and Sons, volume 6 (1985)).

Heretobefore, there has not been disclosed an elastomeric ethylene-propylene copolymer having both a reactivity ratio product $r_1r_2$ between 0.5 and 1.5 and an isotactic index greater than 0 percent, nor that such a copolymer may be obtained by the polymerization of ethylene and propylene in the presence of a catalyst system comprising a selected chiral catalyst and an aluminoxane-co-catalyst.

The present invention provides an ethylene-propylene copolymer comprising from 57 to 85 mole % bound propylene units, and correspondingly to 100 mole %, from 43 to 15 mole % bound ethylene units, said copolymer being characterized by having both of

i) a reactivity ratio product $r_1r_2$ as determined from carbon 13 nuclear magnetic resonance spectral analysis of between 0.5 and 1.5 and

ii) an isotactic index as determined from infra red spectral analysis of greater than 0%.

The copolymers of the present invention are flexible and are rubbery to touch.

In another embodiment, the present invention provides a process for polymerizing an ethylene-propylene copolymer comprising from 57 to 85 mole % bound propylene units, and correspondingly to a total of 100 mole %, from 43 to 15 mole % bound ethylene units, said ethylene-propylene copolymer being characterized by having both of

i) a reactivity ratio product $r_1r_2$ between 0.5 and 1.5, and

ii) an isotactic index greater than 0%,said process comprising polymerizing ethylene and propylene in the presence of

(a) a homogenous chiral catalyst of the formula

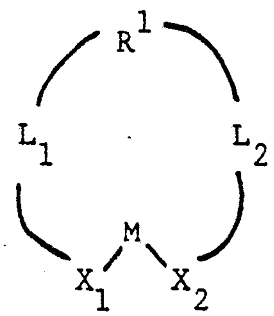

where M is a group IVb metal selected from Ti, Hf and Zr, $X_1$ and $X_2$ are the same or different and are selected from bromine, chlorine and methyl, $L_1$ and $L_2$ are the same or different and each of said $L_1$ and said $L_2$ is a cyclopentadienyl ligand, and

(b) an alumoxane co-catalyst, at a temperature between -60 and 110° C.

As used herein, the term "cyclopentadienyl ligand" is meant to refer to a broad genus of ligands which may be represented by the formula ($C_5R_5$) where each R is the same or different and is hydrogen or a hydrocarbyl radical such as alkyl, alkenyl, anyl, alkyanyl containing from 1 to 20 carbon atoms. Preferred examples of the cyclopentadienyl ligand are cyclopentadiene, indene and especially, tetrahydroindene.

## DETAILED DESCRIPTION

One method to describe the molecular features of an ethylene-propylene copolymer is monomer sequence distribution. Starting with a polymer having a known average composition, the monomer sequence distribution can be determined using Spectroscopic analysis. Carbon 13 nuclear magnetic resonance Spectroscopy ($^{13}C$ NMR) is highly preferred for this purpose, and is used to establish dyad and tryad distribution via the integration of spectral peaks. (If $^{13}C$ NMR is not used for this analysis, substantially lower $r_1r_2$ products are normally obtained.)

The reactivity ratio product $r_1r_2$ (where $r_1$ is the reactivity of ethylene and $r_2$ is the reactivity of propylene) can then be calculated from the measured dyad distribution by the application of the following

formulae.

$r_E r_P = 4 (EE)(PP)/(EP)^2$ (1)

$r_E = K_{11}/K_{12} = 2(EE)/EP\ X$ (2)

$R_P = K_{22}/K_{21} = 2(PP)X/(EP)$ (3)

$N_P = [(PP) + (EP/2)]/(EP/2)$ (4)

$N_E = [(EE) + (EP/2)]/(EP/2)$ (5)

$P = (PP) + (EP/2);\ E = EE + (EP/2)$ (6)

where

$Mol\ \%\ E = (E)100/(E + P)$ (7)

$X = E/P$ in reactor; $1 = E$, $2 = P$

$K_{11}$ and $K_{12}$ are kinetic constants.

As is well known to those familiar with the terminology of copolymerization theory, a reactivity ratio product $r_1r_2$ of 0 is said to define an "alternating" copolymer, and a reactivity ratio product of 1 is said to define a "statistically random" copolymer. In more commonly used language, a copolymer having a reactivity ratio product $r_1r_2$ of between 0.5 and 1.5 is generally said to be random (even though, in strict theoretical terminology, only a copolymer having a reactivity ratio product $r_1r_2$ equal to 1 is defined as being "statistically random"). Furthermore, copolymers having a reactivity ratio product $r_1r_2$ greater than 1.5 contain relatively long homopolymer sequences and are said to be "blocky"

A second method of characterizing ethylene-propylene copolymers is by the isotacicity of any polypropylene sequences. Infra-red ("IR") spectroscopy is a preferred method for the analysis of isotactic polypropylene sequences. The IR Spectra of polypropylene splits into two observable peaks at 997 $cm^{-1}$ and 973 $cm^{-1}$. The quotient of absorbance at 997 $cm^{-1}$ divided by the absorbance at 973 $cm^{-1}$ is a recognized measure of isotacicity. This quotient is commonly multiplied by 100 percent and referred to as the "isotactic index". The copolymers of the present invention have an isotactic index greater than 0 percent, preferably between 3 and 50 percent, especially from 10 to 25 percent.

The copolymers of the present invention are further characterized by having a narrow molecular weight distribution. A "polydispersity index" (the quotient of weight average molecular weight, $\overline{M}w$, divided by number average molecular weight Mn) is typically used to describe molecular weight distribution. Preferred copolymers of the present invention have a polydispersity index between 1.5 and 2.0, and a weight average molecular weight of greater than 50,000.

The present invention also provides a process for preparing ethylene-propylene copolymer having a reactivity ratio $r_1r_2$ of from 0.5 to 1.5 and an isotactic index greater than 1. An essential element of the process is the use of a chiral catalyst, because a non-chiral catalyst will not polymerize polypropylene sequences having a high degree of isotacicity.

The chiral catalyst which is used in the process of the present invention contains a group IVb metal, and two bridged ligands, as illustrated by the following general formula:

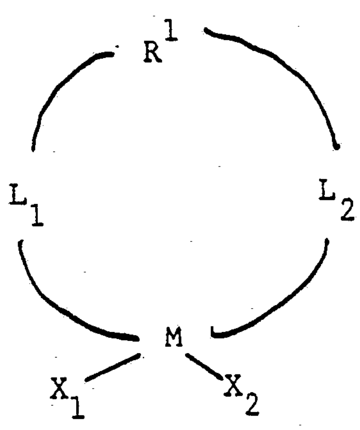

(I)

where M is a group IVb metal selected from titanium, hafnium and zirconium;

$L_1$ and $L_2$ may be the same or different and each is a cyclopentadienyl ligand; $X_1$ and $X_2$ may be the same or different and are selected from the group consisting of bromine, chlorine and methyl; and $R^1$ is a $C_{1-20}$ hydrocarbon which is bonded to said $L_1$ and said $L_2$.

Three highly preferred chiral catalysts according to the above formula (I) are bis (indenyl) ethane zirconium dichloride, bis (indenyl) ethane titanium dichloride, and bis (tetrahydroindenyl) ethane zirconium

dichloride.

The catalyst of the present process is used in conjunction with an aluminoxane co-catalyst. The term aluminoxane is meant to refer to the well known oxides of aluminum which are obtained by carefully reacting an aluminum alkyl with a minor amount of water. Aluminoxanes are preferably prepared by reacting an aluminum alkyl with a metal salt hydrate, as disclosed in U.S. patent 4,542,199.

The structure of alumoxanes is not completely understood. Accordingly, while not wishing to be bound by any theories, it is believed that the previously postulated alumoxane structures indicated below are representative:

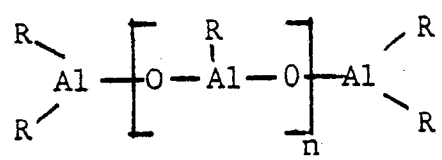

or

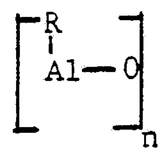

where R is a $C_{1-10}$ alkyl, preferably methyl and

n is an integer between 4 and 20.

Suitable alumoxanes are soluble in toluene at room temperature.

The process of the present invention may be completed at a temperature between -60 and 110 °C, preferably from -10 to 40 °C.

Further details of the present invention are illustrated by the following non limiting examples.

Example 1

This example describes the preparation of the chiral catalysts, bis (indenyl) ethane zirconium dichloride and bis (tetrahydroindenyl) ethane zirconium dichloride.

A. BIS-(INDENYL) ETHANE ZIRCONIUM DICHLORIDE

Initially, Bis (indenyl) ethane was prepared by the reaction of lithium indenide and dibromethane in tetrahydrofuran/dimethypropylene urea solvent (250/12 volume ratio). Bis (indenyl) ethane zirconium dichloride was then prepared by reacting the lithium dianion of bis indenyl ethane with a di-tetrahydrofuran adduct of $ZrCl_4$ according to a technique reported in the literature (Collins et al, J. Organomet. Chem. 342, 21 (1988) ). The resulting compound was a bright yellow solid.

B. BIS (TETRAHYDROINDENYL) ETHANE ZIRCONIUM DICHLORIDE

Bis (tetrahydroindenyl) ethane zirconium dichloride ("BTHIEZ$_r$Cl$_2$") was prepared by the hydrogenation of the above described bis (indenyl) ethane zirconium dichloride. Hydrogenation was completed in $CH_2Cl_2$ using $PtO_2$ at 1500 psig for 4 hours. The $PtO_2$ was removed by filtering and the $CH_2Cl_2$ was removed in vacuum. The resulting white crystalline solid was washed with toluene and filtered.

Example 2

This example describes the preparation of alumoxane.

$Al_2(SO_4)_3.16H_2O$ (sufficient to provide 0.2 mol $H_2O$) was slurried in 250 cc dry toluene under argon while neat trimethyl aluminum ("TMA", 0.2 mol) was added slowly with stirring, and subsequently allowed to stir for 48 hours at room temperature. About 2-4 grams of a white solid was then obtained after filtration. Strict avoidance of exposure to air was maintained because TMA is highly pyrrophoric. The recovered alumoxane was soluble in toluene.

Example 3

This example illustrates the copolymerization of ethylene and propylene.

Polymerizations were carried out in 1 liter crown capped bottles as follows:

A bottle was charged with alumoxane ("AO", 0.20 g prepared according to the procedure of example 2) in an inert atmosphere box, a magnetic stirbar and the bottle capped with a two hole crown cap sealed with a fluorinated rubber gasket. 200 cc dry toluene was added and the bottle placed in a 5 gallon ice bath. The solution was purged and saturated with the feed mixture (ethylene and propylene) at 15 psig. The monomers were fed in and out of the bottle at 400 - 1000 sccm with pressure maintained via a backpressure regulator. Ethylene-propylene monomer blends were made dynamically using mass flow controllers (Matheson Dyna-Blender® Model 8219). After steady state was attained, a catalyst solution was then added (4.3 cc of 1.6 x $10^3$ M $BTHIEZrCl_2$ in toluene). The polymerization was stopped after the desired time by addition of 2 cc ethanol. A hindered phenol antioxidant (0.2 g of IRGANOX® B225) was then added to the solution and the polymer coagulated and washed with ethanol. The polymer crumb was washed, then filtered and dried at 60 °C in vacuum.

Ethylene and propylene concentrations in solution were determined by gravimetric measurement of the amount of each monomer required for solution saturation at 15 psig, 0 °C, in toluene.

The polymers of this and subsequent examples were analyzed by techniques which included $^{13}C$ NMR, Differential Scanning Calorimetry ("DSC"), Fourier Transform Infra Red ("FTIR") and Gel Permeation Chromatography ("GPC").

High temperature $^{13}C$ NMR was completed using a Bruker 250 MHz spectrometer at 140 °C in 1,2,4 trichlorobenzene with a 90° pulse and 15 second recycle time. Room temperature $^{13}C$ NMR was completed on some polymer samples.

DSC was carried out using a DuPont 9900 thermal analysis system with a scan rate of 15 °C/minute from -150 to 150 °C.

Films were pressed at 150 °C and spectra recorded using a Bruker IFS-45 FTIR in the absorbance mode. Quantitation of EP was made empirically using a calibration equation:

$[\log(abs_{1167}/abs_{973})-.795]/[-.023]$ = weight %E

High temperature GPC was carried out on certain samples using Universal calibration and the following constants (135 °C in trichlorobenzene):

| | K | Alpha |
|---|---|---|
| Polystyrene | 1.75 x $10^{-4}$ | .67 |
| Polypropylene | 1.90 x $10^{-4}$ | .725 |
| Polyethylene | 4.06 x $10^{-4}$ | .725 |

An average of the K for PE and PP was used for EP copolymer samples.

The above analytical measurements were used to characterize the molecular weight, reactivity ratio and isotactic number of the polymers.

TABLE 1

| Experiment | Polymer, Mole % E[a] | Feed, Mole % E[b] | Activity KgEP/gZr/hr | $r_1$ | $r_2$ | $r_1r_2$ | Isotactic Index (%) |
|---|---|---|---|---|---|---|---|
| 1 | 20 | 1.70 | 12 | 8.66 | .09 | .82 | 53 |
| 2 | 22 | 6 | 103 | 4.66 | .23 | 1.09 | 44 |
| 3 | 26 | 6 | 95 | 5.94 | .20 | 1.15 | 44 |
| 4 | 46 | 9.80 | 40 | 6.57 | .06 | .74 | 0 |
| 5 | 60 | 24.50 | 36 | 4.09 | .20 | .83 | 0 |
| 6 | 87 | 49.40 | 19 | 5.50 | .17 | .93 | 0 |
| C = Comparative | | | | | | | |

a = Mole % ethylene in copolymer, as determined by $^{13}C$ NMR

b = Mole % ethylene in monomer feed solution (basis ethylene plus propylene = 100 mole %)

The reactivity ratio product ("$r_1r_2$") figures shown in Table 1 were calculated using the aforedescribed formulae and the data shown in Table 2. It can be seen from the data in Table 1 that the reactivity ratio products of the inventive polymers of experiments 1, 2 and 3 are close to 1, indicating a random copolymer. In addition, the isotactic index of the inventive polymers is greater than 0 percent and is particularly high for the inventive polymers of experiments 2 and 3. In contrast, the isotactic index of the polymers of comparative experiments 4, 5 and 6 is 0.

GPC analysis of the copolymer of experiment 2 showed it to have a weight average molecular weight (MW) of 58,000 and a polydispersity of 1.8.

A sample of this copolymer was compression molded in a 2 mm thick sheet. Stress-strain measurements were made on samples cut from the sheet, according to the test procedures given in ASTM D412. The copolymer of experiment 2 was found to have 1240% elongation at break and an ultimate tensile strength of 9.2 MPa, which together indicate a very high green strength.

TABLE 2

| $^{13}C$ NMR DATA | | | | | | |
|---|---|---|---|---|---|---|
| SPECTRAL PEAKS | | | | | | |
| Saa | 25.42 | 22.08 | 19.87 | 10.79 | 6.32 | 1.06 |
| Sag | 7.74 | 9.44 | 9.82 | 12.09 | 9.33 | 2.47 |
| Sad | 1.56 | 2.63 | 3.22 | 8.56 | 10.90 | 9.80 |
| Sgg | .68 | 1.73 | .93 | 2.49 | 2.63 | 1.42 |
| Sgd | .00 | .83 | 1.16 | 3.23 | 5.90 | 9.27 |
| Sdd | .00 | .62 | 1.06 | 4.93 | 13.43 | 51.49 |
| Sbd | 1.39 | 2.56 | 3.34 | 8.01 | 10.44 | 9.75 |
| Sbd | 4.15 | 4.67 | 5.27 | 6.21 | 4.80 | .90 |
| NORMALIZED DATA | | | | | | |
| PP | .718 | .614 | .561 | .279 | .158 | .023 |
| EP | .263 | .336 | .368 | .533 | .506 | .265 |
| EE | .020 | .050 | .070 | .188 | .336 | .712 |
| Where<br>PP = Saa<br>EP = Sag + Sad<br>EE = 1/2(Sbd + Sdd) + 1/4(Sgd) | | | | | | |

Example 4

This example provides further data regarding isotactic index. A series of polymers having different levels of bound propylene was prepared according to the polymerization procedures described in example 3. The composition ("mole % propylene") of the copolymers was determined by FTIR as was the isotactic index. Results are shown in Table 3.

TABLE 3

| Experiment | Mole % Propylene in Copolymer | Isotactic Index (%) |
|---|---|---|
| 40 - C | 100 | 89 |
| 41 | 77 | 50 |
| 42 | 77 | 43 |
| 43 | 76 | 43 |
| 44 | 76 | 43 |
| 45 | 76 | 41 |
| 46 | 75 | 47 |
| 47 | 75 | 42 |
| 48 | 74 | 32 |
| 49 | 72 | 38 |
| 50 | 70 | 31 |
| 51 | 69 | 32 |
| 52 | 69 | 24 |
| 53 | 67 | 23 |
| 54 | 66 | 21 |
| 55 | 63 | 12 |
| 56 | 63 | 10 |
| 57 | 61 | 10 |
| 58 | 57 | 10 |
| 59 - C | 53 | 0 |
| 60 - C | 50 | 0 |
| C = Comparative | | |

Example 5

The elastomeric ethylene-propylene copolymers of the present invention are suitable for blending with thermoplastic alpha-olefin polymers. This example illustrates the preparation of a blend of the present ethylene-propylene copolymers and polypropylene.

An ethylene-propylene copolymer having 24 mole % ethylene was prepared according to the process described in example 3. Blends of 10, 20, 30 and 40 weight percent of this copolymer and an isotactic polypropylene sold under the tradename Profax® 6331 by Himont were then prepared by mixing in an internal mixer at a temperature of about 170°C for about 8 to 10 minutes. The resulting blends were visually homogenous, indicating the compatibility of the two polymers.

## Claims

1. An ethylene-propylene copolymer comprising from 57 to 85 mole % bound propylene units, and correspondingly to 100 mole %, from 43 to 15 mole % bound ethylene units, said copolymer being characterized by having both of

i) a reactivity ratio product $r_1r_2$ as determined from carbon 13 nuclear magnetic resonance spectral analysis of between 0.5 and 1.5 and

ii) an isotactic index as determined from infra red spectral analysis of greater than 0%.

2. Ethylene-propylene copolymer of claim 1 having an isotactic index between 3 and 50 percent.

3. Ethylene-propylene copolymer of claim 1 having an isotactic index between 10 and 25 percent.

4. Ethylene-propylene copolymer of claim 3 having a weight average molecular weight greater than 50,000.

5. Ethylene-propylene copolymer of claim 4 having a polydispersity index between 1.5 and 2.0.

6. A blend of a thermoplastic alpha-olefin polymer and the ethylene-propylene copolymer of claim 1.

7. The blend of claim 6 wherein said thermoplastic alpha-olefin polymer is polypropylene.

8. A process for polymerizing an ethylene-propylene copolymer comprising from 57 to 85 mole % bound propylene units, and correspondingly to a total of 100 mole %, from 43 to 15 mole % bound ethylene units, said ethylene-propylene copolymer being characterized by having both of

i) a reactivity ratio product $r_1 r_2$ between 0.5 and 1.5, and

ii) an isotactic index greater than 0%,said process comprising polymerizing ethylene and propylene in the presence of

(a) a homogenous chiral catalyst of the formula

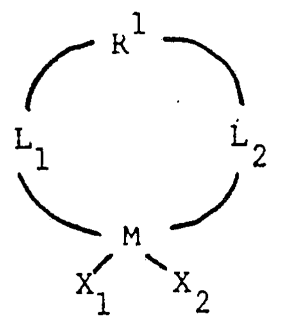

where M is a group IVb metal selected from Ti, Hf and Zr, $X_1$ and $X_2$ are the same or different and are selected from bromine, chlorine and methyl, $L_1$ and $L_2$ are the same or different and each of said $L_1$ and said $L_2$ is a cyclopentadienyl ligand, and $R^1$ is a $C_{1-20}$ hydrocarbon which is bonded to said $L_1$ and said $L_2$, and

(b) an alumoxane co-catalyst, at a temperature between -60 and 110° C.

9. The process of claim 8 wherein said $L_1$ and said $L_2$ are both tetrahydroindenyl ligand.

10. The process of claim 9 wherein said R is ethane.

11. The process of claim 10 wherein the polymerization temperature is from -10 to 40° C.